(19) Europäisches Patentamt
European Patent Office
Office européen des brevets

(11) **EP 3 125 217 A1**

(12) **EUROPEAN PATENT APPLICATION**

(43) Date of publication:
01.02.2017  Bulletin 2017/05

(51) Int Cl.:
*G09B 23/28* (2006.01)    *G09B 23/30* (2006.01)

(21) Application number: 16181419.9

(22) Date of filing: 27.07.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.07.2015  JP 2015150669

(71) Applicant: Seiko Epson Corporation
Tokyo 160-8801 (JP)

(72) Inventors:
• Sekino, Hirokazu
  Nagano, 392-8502 (JP)
• Ito, Jiro
  Nagano, 392-8502 (JP)
• Seto, Takeshi
  Nagano, 392-8502 (JP)

(74) Representative: Hoffmann Eitle
Patent- und Rechtsanwälte PartmbB
Arabellastraße 30
81925 München (DE)

(54) **SIMULATED ORGAN**

(57)    A simulated organ includes a simulated blood vessel that simulates a blood vessel of a human body, and a simulated parenchyma that simulates a parenchyma cell of the human body, and in which the simulated blood vessel is embedded in the simulated parenchyma. The simulated blood vessel has breaking strength which is equal to or greater than three times that of the simulated parenchyma.

FIG. 2

EP 3 125 217 A1

**Description**

BACKGROUND

1. Technical Field

The present invention relates to a simulated organ.

2. Related Art

In recent years, a simulated organ of a human body has been normally used in operation practice for improving operation skills. A proposal for this simulated organ has been reviewed in which each hardness relationship is defined after stacking a simulated muscle layer of a human body muscle, a simulated parenchyma layer of tissues overlying the muscle, and a simulated skin layer of the skin so as to simulate a human body part surrounding blood vessels in the human body (for example, refer to JP-A-2012-203153).

Without being limited to injection needle puncturing from a simulated skin layer side to a simulated blood vessel in a simulated organ, an operation technique includes incision or excision performed in a simulated blood vessel periphery by using a water jet scalpel. In this operation practice, when the incision or the excision is performed on a simulated parenchyma of the simulated blood vessel periphery by using a pulse jet from the water jet scalpel, it is desirable to recognize whether the simulated blood vessel may be damaged or it is desirable that practice for incising and excising the simulated parenchyma can be performed without causing any damage to the simulated blood vessel. However, although the simulated organ disclosed in JP-A-2012-203153 is suitable for practice for puncturing the blood vessel, the operation practice in the simulated blood vessel periphery is not taken into consideration as a matter of fact.

SUMMARY

An advantage of some aspects of the invention is to provide a simulated organ which is suitable for operation practice on the assumption that incision or excision is performed on a simulated parenchyma in a simulated blood vessel periphery.

The invention can be implemented as the following forms.

(1) An aspect of the invention provides a simulated organ. The simulated organ includes a simulated blood vessel that simulates a blood vessel of a human body, and a simulated parenchyma that simulates a parenchyma cell of the human body. The simulated blood vessel is embedded in the simulated parenchyma. The simulated blood vessel has pressing pin breaking strength which is equal to or greater than three times that of the simulated parenchyma. In the simulated organ according to the aspect, even if a force is applied to the simulated parenchyma in a simulated blood vessel periphery so that the simulated parenchyma can be broken and the force is applied to the simulated blood vessel, the simulated blood vessel is not damaged. Therefore, according to the simulated organ in the aspect, an operation status can be provided on the assumption that incision or excision is performed on the simulated parenchyma in the simulated blood vessel periphery.

(2) In the aspect, the pressing pin breaking strength per unit area of the simulated parenchyma may be 0.01 MPa to 0.07 MPa, and the pressing pin breaking strength per unit area of the simulated blood vessel may be 0.1 MPa to 0.3 MPa. With this configuration, an operation status can be provided in which a relationship of breaking strength with regard to a cerebral parenchyma in a brain of a human body and a cerebral blood vessel embedded therein is reflected.

The invention can be implemented in various forms in addition to the above-described configurations. For example, the invention can be implemented as a manufacturing method of the simulated organ.

BRIEF DESCRIPTION OF THE DRAWINGS

The invention will be described with reference to the accompanying drawings, wherein like numbers reference like elements.

Fig. 1 is a view for schematically describing a configuration of a liquid ejecting apparatus.
Fig. 2 is a top view of a simulated organ.
Fig. 3 is a sectional view taken along line 3-3 in Fig. 2.
Fig. 4 is a view for describing a strength test of a material.
Fig. 5 is a view illustrating test data obtained by the strength test.
Fig. 6 is a flowchart illustrating a manufacturing procedure of a simulated organ.
Fig. 7 is a top view for describing a state where a first flexible member has been inserted into a first member.
Fig. 8 is a sectional view taken along line 8-8 illustrated in Fig. 7.
Fig. 9 is a top view for describing a state where a first simulated blood vessel, a second simulated blood vessel, and a third simulated blood vessel have been arranged.
Fig. 10 is a sectional view taken along line 10-10 in Fig. 9.
Fig. 11 is a top view for describing a state where a second flexible member has been inserted.
Fig. 12 is a sectional view taken along line 12-12 in Fig. 11.
Fig. 13 is a top view for describing a state where a simulated parenchyma has been arranged.

Fig. 14 is a sectional view taken along line 14-14 in Fig. 13.

Fig. 15 is a top view for describing an excision portion.

Fig. 16 is a sectional view taken along line 16-16 in Fig. 15.

DESCRIPTION OF EXEMPLARY EMBODIMENTS

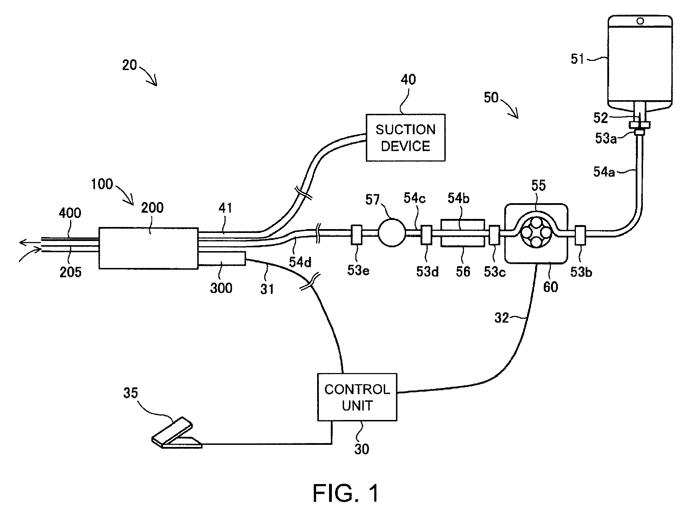

Fig. 1 is a view for schematically describing a configuration of a liquid ejecting apparatus 20. The liquid ejecting apparatus 20 is a medical device used in medical institutions, and has a function to incise and excise a lesion by ejecting a liquid to the lesion in a pulse-like manner.

The liquid ejecting apparatus 20 includes a control unit 30, an actuator cable 31, a pump cable 32, a foot switch 35, a suction device 40, a suction tube 41, a liquid supply device 50, and a handpiece 100.

The liquid supply device 50 includes a water supply bag 51, a spike needle 52, first to fifth connectors 53a to 53e, first to fourth water supply tubes 54a to 54d, a pump tube 55, a clogging detection mechanism 56, and a filter 57. The handpiece 100 includes a nozzle unit 200 and an actuator unit 300. The nozzle unit 200 includes an ejecting tube 205 and a suction pipe 400.

The water supply bag 51 is made of a transparent synthetic resin, and the inside thereof is filled with a liquid (specifically, a physiological saline solution). In the present application, even if a bag is filled with liquids other than the water, the bag is called the water supply bag 51. The spike needle 52 is connected to the first water supply tube 54a via the first connector 53a. If the spike needle 52 is stuck into the water supply bag 51, the liquid filling the water supply bag 51 is in a state where the liquid can be supplied to the first water supply tube 54a.

The first water supply tube 54a is connected to the pump tube 55 via the second connector 53b. The pump tube 55 is connected to the second water supply tube 54b via the third connector 53c. The tube pump 60 pinches the pump tube 55. The tube pump 60 feeds the liquid inside the pump tube 55 to the second water supply tube 54b side from the first water supply tube 54a side.

The clogging detection mechanism 56 detects clogging inside the first to fourth water supply tubes 54a to 54d by measuring pressure inside the second water supply tube 54b.

The second water supply tube 54b is connected to the third water supply tube 54c via the fourth connector 53d. The filter 57 is connected to the third water supply tube 54. The filter 57 collects foreign substances contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from a distal end of the ejecting tube 205 by driving the actuator unit 300. The liquid is intermittently ejected in this way. Accordingly, it is possible to ensure excision capability using a small flow rate.

The ejecting tube 205 and the suction pipe 400 configure a double tube in which the ejecting tube 205 serves as an inner tube and the suction pipe 400 serves as an outer tube. The suction tube 41 is connected to the nozzle unit 200. The suction device 40 performs suction on the inside of the suction pipe 400 through the suction tube 41. The suction is performed on the liquid or excised fragments in the vicinity of the distal end of the suction pipe 400.

The control unit 30 controls the tube pump 60 and the actuator unit 300. Specifically, while the foot switch 35 is stepped on, the control unit 30 transmits a drive signal via the actuator cable 31 and the pump cable 32. The drive signal transmitted via the actuator cable 31 drives a piezoelectric element (not illustrated) included in the actuator unit 300. The drive signal transmitted via the pump cable 32 drives the tube pump 60. Accordingly, while a user steps on the foot switch 35, the liquid is intermittently ejected. While the user does not step on the foot switch 35, the liquid ejection is stopped.

Hereinafter, a simulated organ will be described. The simulated organ is also called a phantom, and is an artificial product whose portion is excised by the liquid ejecting apparatus 20 in the present embodiment. The simulated organ according to the embodiment is used in performing a simulated operation for the purpose of a performance evaluation of the liquid ejecting apparatus 20, manipulation practice of the liquid ejecting apparatus 20, and the like.

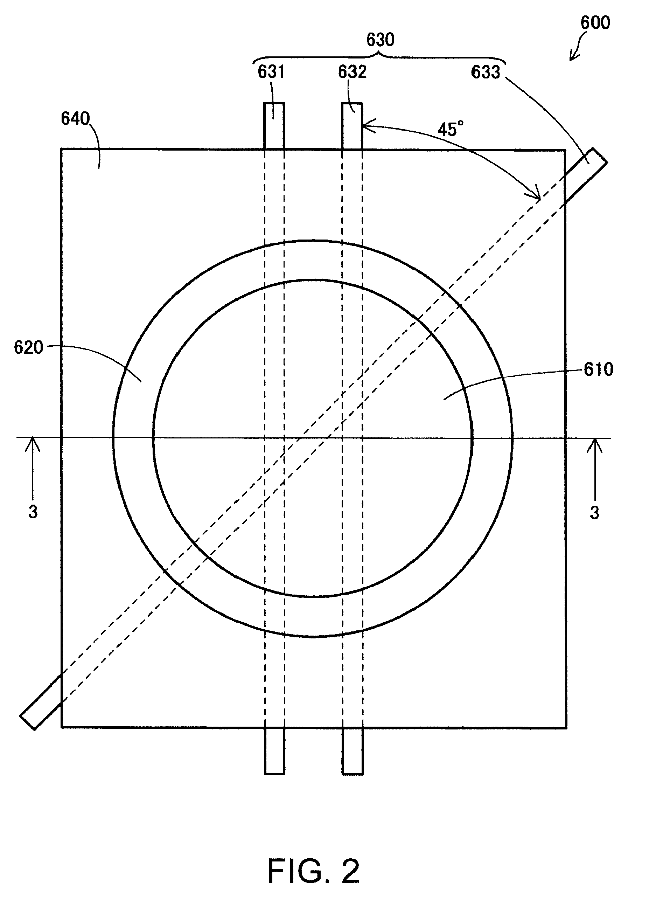

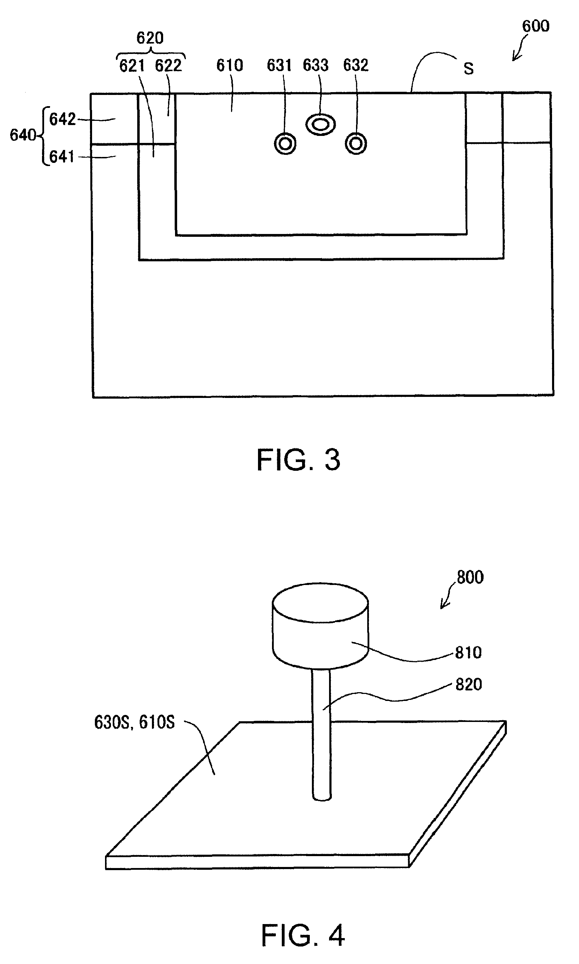

Fig. 2 is a top view of a simulated organ 600. Fig. 3 is a sectional view taken along line 3-3 illustrated in Fig. 2. The simulated organ 600 includes a simulated parenchyma 610, a flexible member 620, a first simulated blood vessel 631, a second simulated blood vessel 632, a third simulated blood vessel 633, and a case 640. In some cases, the first simulated blood vessel 631, the second simulated blood vessel 632, and the third simulated blood vessel 633 may be collectively referred to as a simulated blood vessel 630.

The case 640 includes a first member 641 and a second member 642. The second member 642 is fixed onto the first member 641, thereby configuring the case 640. The reason that the case 640 is configured to have two members in this way is to facilitate manufacturing of the simulated organ 600 (details will be described later).

The first member 641 and the second member 642 are manufactured by using a material having sufficient rigidity for supporting the flexible member 620 and the simulated blood vessel 630 (iron, aluminum, a hard resin, or the like). In order to have the above-described sufficient rigidity, the first member 641 and the second member 642 are formed of a material having a sufficiently higher elastic modulus compared to the flexible member 620.

The case 640 according to the embodiment is manufactured by using a transparent resin material. Since the case 640 is transparent, the flexible member 620 is visible from a side surface of the case 640. In the drawing according to the application, all members are opaquely illustrated.

The flexible member 620 is arranged inside a cylindrical recess formed in a central portion of the case 640. The flexible member 620 is formed in such a way that a first flexible member 621 and a second flexible member 622 are stacked on each other. The flexible member 620 is internally recessed so that the simulated parenchyma 610 can be held therein, and has a circular cup shape. The flexible member 620 is formed of a material which is softer than that of the case 640 and harder than that of the simulated parenchyma 610. The flexible member 620 according to the embodiment is formed of a material whose pressing pin breaking strength is five times more and whose elastic modulus is also five times more compared to those of the simulated parenchyma 610.

The simulated parenchyma 610 is an artificial product which simulates a parenchyma (parenchyma cell) which is a cell having an original physiological function of a human body organ (for example, a human brain, liver, or the like). According to the embodiment, the simulated parenchyma 610 simulates a cerebral parenchyma cell of a human body, and is arranged in the cylindrical recess formed in the central portion of the flexible member 620. The simulated parenchyma 610 is a target portion of incision and excision using the liquid ejecting apparatus 20.

The simulated blood vessel 630 is an artificial product which simulates a cerebral blood vessel of the human body. The simulated blood vessel 630 is held by the case 640, and is embedded in the simulated parenchyma 610 after penetrating the simulated parenchyma 610, the flexible member 620, and the case 640. Three in total, the first simulated blood vessel 631, the second simulated blood vessel 632, and the third simulated blood vessel 633 are arranged substantially horizontal.

The first simulated blood vessel 631 and the second simulated blood vessel 632 are arranged so as to respectively have an intersection point with respect to the third simulated blood vessel 633. The first simulated blood vessel 631 and the second simulated blood vessel 632 are arranged parallel to each other, and have no intersection point. The intersection point described herein means a portion where the first simulated blood vessel 631 and the second simulated blood vessel 632 respectively intersect the third simulated blood vessel 633 in a case where the simulated blood vessel 630 is projected on a surface S (Fig. 3). The surface S comes into contact with an upper end of the case 640 and comes into contact with a surface on which the simulated parenchyma 610 is exposed from the case 640.

According to the embodiment, the first to third simulated blood vessels are arranged so that the three are not parallel to each other. The first simulated blood vessel 631 and the second simulated blood vessel 632 are arranged parallel to each other. The third simulated blood vessel 633 is arranged so that an angle on a horizontal plane becomes 45° with respect to the first simulated blood vessel 631 and the second simulated blood vessel 632. The third simulated blood vessel 633 crosses the first simulated blood vessel 631 and the second simulated blood vessel 632 in an overhead crossing manner. At the crossing point, the third simulated blood vessel 633 is located over the first simulated blood vessel 631 and the second simulated blood vessel 632 (refer to Fig. 3).

Hereinafter, physical properties of the simulated parenchyma 610 and the simulated blood vessel 630 will be described. The simulated blood vessel 630 is manufactured as a hollow member by using polyvinyl alcohol (PVA). As is known, the strength of the PVA can be changed by changing manufacturing conditions thereof. According to the embodiment, the manufacturing conditions of the PVA are defined so that the pressing pin breaking strength of the simulated blood vessel 630 becomes 0.2 MPa, and the strength of the blood vessel is determined as follows.

It is known that pig cerebral tissues, specifically, a pig cerebral blood vessel and a cerebral parenchyma having the blood vessel embedded therein, have strength which is substantially the same degree as that of the human body. The strength (pressing pin breaking strength per unit area: 0.2 MPa) of the simulated blood vessel 630 is determined by using the pig cerebral tissue. In addition, the diameter of the blood vessel is set to $\varphi$ 0.2 mm to 0.8 mm which simulates the cerebral blood vessel of the human body. When the strength is measured, a strength measuring machine (manufactured by Shimadzu Corporation: Table-top Material Tester EZ-S) to be described later is used.

The strength of the simulated parenchyma 610 can be changed by changing the manufacturing conditions of the PVA. According to the embodiment, the pressing pin breaking strength per unit area (hereinafter, simply referred to as pressing pin breaking strength) of the simulated parenchyma 610 is set to equal to or smaller than one third of the simulated blood vessel 630. In other words, the simulated blood vessel 630 has breaking strength which is three times or more compared to the simulated parenchyma 610. As described previously, according to the embodiment, the pressing pin breaking strength of the simulated blood vessel 630 is defined as 0.2MPa. Accordingly, the strength of the simulated parenchyma 610 is adjusted by changing the manufacturing conditions of the PVA so as to obtain the pressing pin breaking strength in a range of 0.01 MPa to 0.07 MPa.

Fig. 4 is a view for describing a strength test of a material. A simulated parenchyma test sample 610S illustrated in the drawing is a test sample of the simulated parenchyma 610, which is formed in order to cure the PVA under the same conditions as the manufacturing conditions of the simulated parenchyma 610. A simulated blood vessel test sample 630S is a test sample of the simulated blood vessel 630, which is formed using the PVA under the same condition as the manufacturing conditions of the simulated blood vessel 630. A strength measuring machine 800 presses a pin 820 against the test sample by using a load cell 810. The thickness of the test sample is adjusted in accordance with a measurement condition in the strength measuring machine 800 illustrated in Fig. 4.

Both test samples of the simulated parenchyma test sample 610S and the simulated blood vessel test sample 630S are respectively and separately placed on a test table (not illustrated) of the above-described strength measuring machine 800, and are individually subjected to the strength test. The strength measuring machine 800 applies a pressing force of the load cell 810 to the simulated parenchyma test sample 610S or the simulated blood vessel test sample 630S subjected to the strength test, via the pin 820. In the strength test, the pin 820 is pressed and deformed until the simulated parenchyma test sample 610S or the simulated blood vessel test sample 630S starts to break. The pressing force of the pin 820 during this deformation process is measured from the load cell 810 on a real time basis. The pin 820 used in measuring the pressing pin breaking strength of the simulated blood vessel test sample 630S which is the test sample of the simulated blood vessel 630 has a pin diameter of 0.5 mm, and is pressed into the test samples at a pressing speed of 1 mm/s. The pin 820 used in measuring the pressing pin breaking strength of the test sample 610S which is the test sample of the simulated parenchyma 610 has a pin diameter of 1.0 mm. The pin 820 is pressed into the test samples at a pressing speed of 1 mm/s.

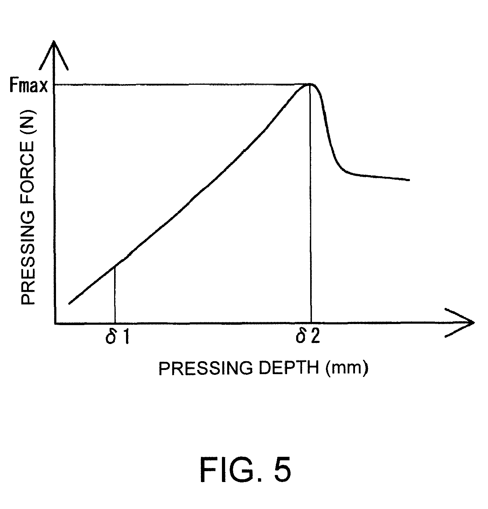

Fig. 5 is a view illustrating test data obtained by the above-described strength test. The vertical axis represents the pressing force of the pin 820, and the horizontal axis represents a pressing depth obtained by the pin 820. The pin 820 is pressed at the speed of 1 mm/s. Accordingly, as illustrated in Fig. 5, the pressing depth increases with the lapse of time, and the pressing force increases so as to be substantially linear with respect to the pressing depth. The physical property values of the simulated parenchyma 610 and the simulated blood vessel 630 are obtained from a graph in Fig. 5 in the following manner.

As illustrated in Fig. 5, until the pressing depth reaches a depth δ2, the pressing force also increases due to an increase in the pressing depth. An elastic modulus (MPa) of the simulated parenchyma test sample 610S or the simulated blood vessel test sample 630S is calculated as a portion of a linear region, based on a data gradient in a region whose pressing depth reaches a depth δ1 (<δ2). The calculation employs Equation (1) below. Equation (1) is a Hertz Sneddon equation.

$$F=2R\left\{E/\left(1-\nu^{2}\right)\right\}\delta \quad (1)$$

In Equation (1), F represents the pressing force, R represents a radius of a pin tip of the pin 820, E represents an elastic modulus, ν represents a Poisson's ratio, and δ represents the pressing depth. It is preferable to set the depth δ1 to a great value having such a degree that the value can approximate if the data is linear. On the other hand, the Hertz Sneddon equation is effective in a case where the depth δ is sufficiently smaller than the radius R (= 0.25 mm or 0.5 mm). Accordingly, it is preferable to set the depth δ1 so as to be sufficiently smaller than the radius R. If Equation (1) is modified, Equation (2) is obtained as follows.

$$E=\left\{\left(1-\nu^{2}\right)/2R\right\}(F/\delta) \quad (2)$$

In Equation (2), F/δ represents the data gradient. The Poisson's ratio ν can employ 0.49 as an estimate value, based on the fact that the simulated parenchyma test sample 610S or the simulated blood vessel test sample 630S is substantially incompressible. The radius R is known as described above. The simulated parenchyma test sample 610S and the simulated blood vessel test sample 630S have different radii R. Accordingly, it is possible to calculate a pressing pin elastic modulus E of the simulated parenchyma test sample 610S or the simulated blood vessel test sample 630S by measuring the data gradient.

As illustrated in Fig. 5, the pressing force peaks out at a certain pressing depth. The reason that the pressing force peaks out is considered to be due to the fact that the simulated parenchyma test sample 610S or the simulated blood vessel test sample 630S is broken. The pressing force when the pressing force peaks out is set to the maximum pressing force Fmax, and the pressing depth at the time of the maximum pressing force Fmax is set to the depth δ2. Pressing pin breaking strength P (MPa) is calculated by Equation (3) below. The radius R in this equation is known as described above. The simulated parenchyma test sample 610S and the simulated blood vessel test sample 630S have respectively different radii.

$$P=Fmax/\left(\pi R^{2}\right) \quad (3)$$

Through the above-described test, the manufacturing conditions of the simulated blood vessel 630 are adjusted in a manufacturing process (to be described later) so as to obtain the strength which is close to the above-described pressing pin breaking strength (0.2 MPa) provided for the simulated blood vessel 630. The simulated blood vessel 630 is manufactured by using a material prepared in this way. In addition, various adjustments of the PVA are performed on the simulated parenchyma 610 in the manufacturing process (to be described later) so as to obtain the above-described pressing pin breaking strength (0.01 MPa to 0.07 MPa) provided for the simulated parenchyma 610.

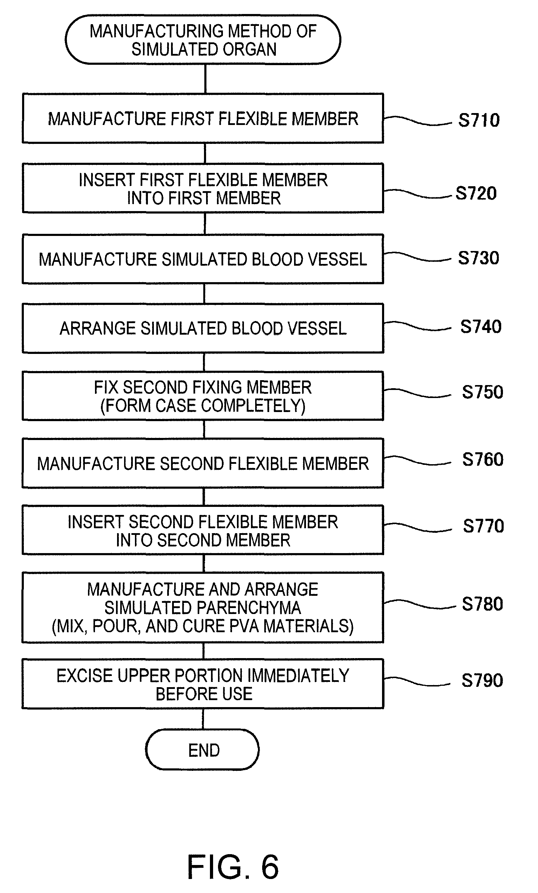

Fig. 6 is a flowchart illustrating a manufacturing procedure of the simulated organ 600. The first flexible member 621 is first manufactured (Step S710). Specifically, a mixture obtained by mixing and stirring a main agent of urethane and a curing agent is poured into a separately prepared die (not illustrated). Thereafter, the urethane is gelled into elastomeric gel, thereby forming the first flexible member 621. According to this die molding, it is possible to obtain the first flexible member 621 whose upper end is open in a recessed shape.

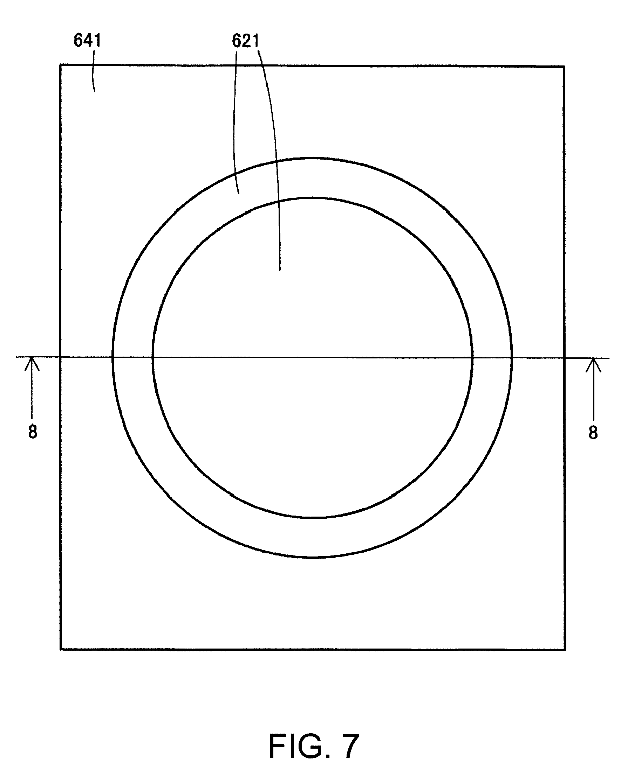

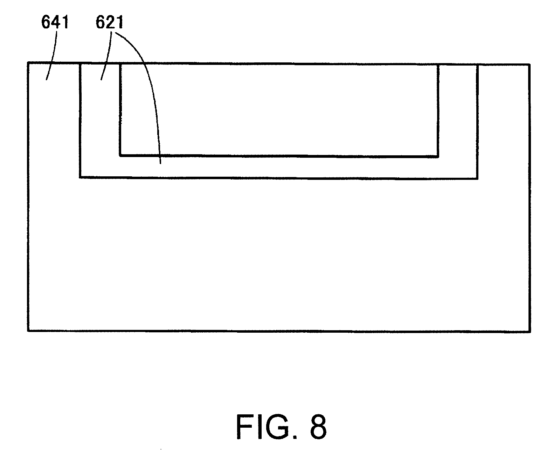

Next, the first flexible member 621 is inserted into the recess of the first member 641 (Step S720). Fig. 7 is a top view for describing a state where the first flexible member 621 has been inserted into the first member 641. Fig. 8 is a sectional view taken along line 8-8 illustrated in Fig. 7.

Next, the simulated blood vessel 630 is manufactured (Step S730). As a material for the simulated blood vessel 630, the embodiment employs polyvinyl alcohol (PVA). In a case of the embodiment, the simulated blood vessel 630 is a hollow member, and thus, the following manufacturing method can be employed. According to the method, an outer periphery of an extra fine wire is coated with the PVA prior to curing, and the extra fine wire is pulled out after the PVA is cured. The outer diameter of the extra fine wire is aligned with the inner diameter of the blood vessel. The extra fine wire is made of metal, and is formed of a piano wire, for example. In manufacturing the simulated blood vessel 630 by using the PVA, as described previously, the manufacturing conditions of the PVA are adjusted so that the pressing pin breaking strength becomes 0.2 MPa. The simulated blood vessel 630 is formed by using the PVA whose manufacturing conditions have been adjusted and the extra fine wire such as the piano wire. In a case where the first simulated blood vessel 631, the second simulated blood vessel 632, and the third simulated blood vessel 633 are set to be different simulated blood vessels, the diameter of the extra fine wire to be used may be changed.

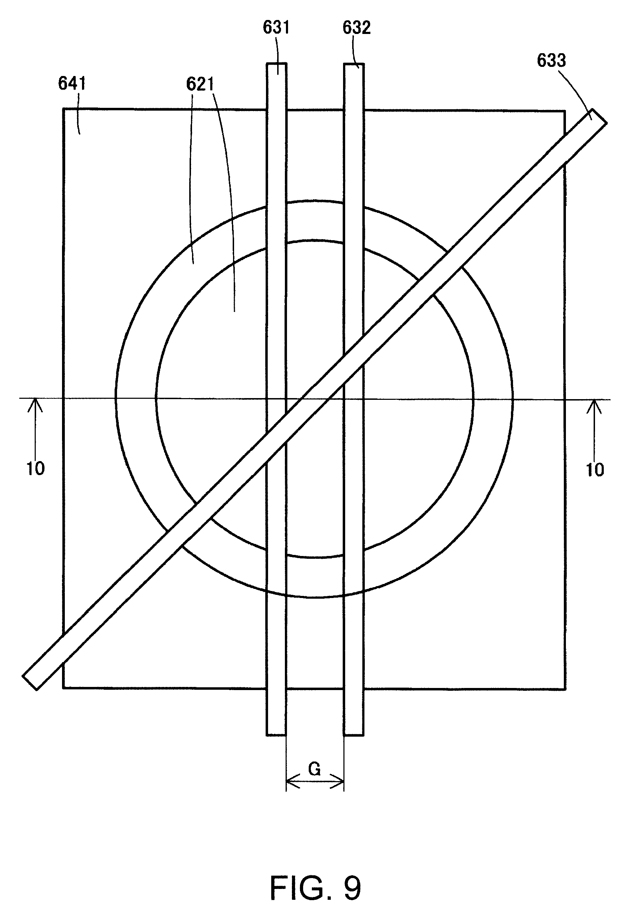

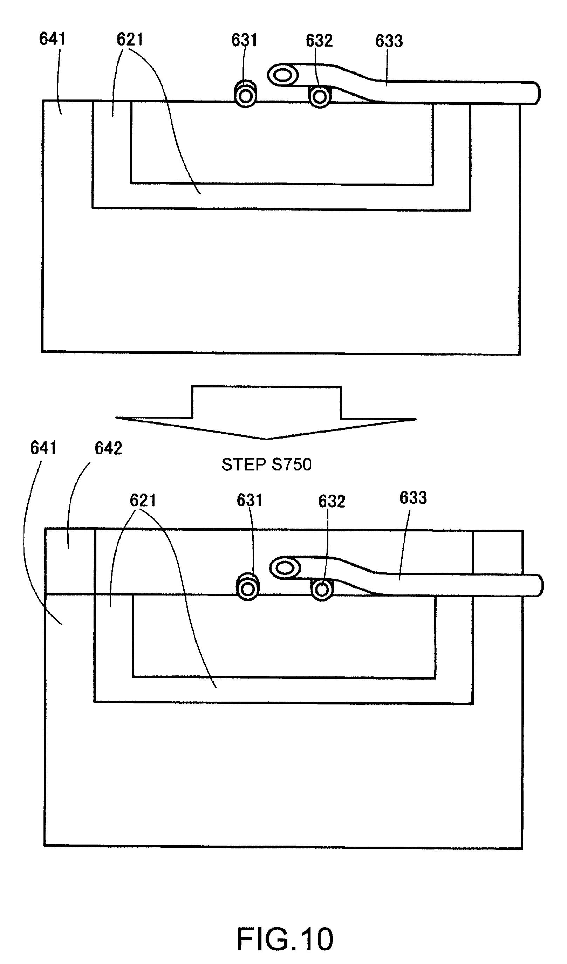

Next, the simulated blood vessel 630 is arranged (Step S740). Fig. 9 is a top view for describing a state where the first simulated blood vessel 631, the second simulated blood vessel 632, and the third simulated blood vessel 633 have been arranged. Fig. 10 is a view for describing a sectional view taken along line 10-10 in Fig. 9 together with an assembly state of the second member 642. As illustrated in Figs. 9 and 10, when the blood vessels are arranged in Step S740, the first simulated blood vessel 631 and the second simulated blood vessel 632 are arranged at a predetermined position, and thereafter, the third simulated blood vessel 633 is arranged at a predetermined position.

A gap G between the first simulated blood vessel 631 and the second simulated blood vessel 632 is set to a distance larger than the diameter of the suction pipe 400 (refer to Fig. 1). This enables the suction pipe 400 to be inserted between the first simulated blood vessel 631 and the second simulated blood vessel 632 when incision and excision are performed on the simulated parenchyma 610. However, even if the gap G is too wide, the presence of the simulated blood vessel 630 in the vicinity of an excision target is less affected. Accordingly, the gap G is set to approximately several times the diameter of the suction pipe 400.

Next, the second member 642 is fixed to the first member 641 (Step S750). Specifically, as illustrated in a lower section in Fig. 10, the second member 642 having a rectangular frame shape is placed on the first member 641. The simulated blood vessel 630 is pinched by the first member 641 and the second member 642. In this state, the second member 642 is fixed to the first member 641 by using a screw (not illustrated). In this manner, the case 640 is completed, and an upper region of the first flexible member 621 is surrounded with the second member 642.

Next, the second flexible member 622 is manufactured (Step S760). The manufacturing method is the same as the manufacturing method (Step S710) of the first flexible member 621. However, the second flexible member 622 has a shape different from that of the first flexible member 621, and has a ring shape. Accordingly, a die different from that in Step S710 is used.

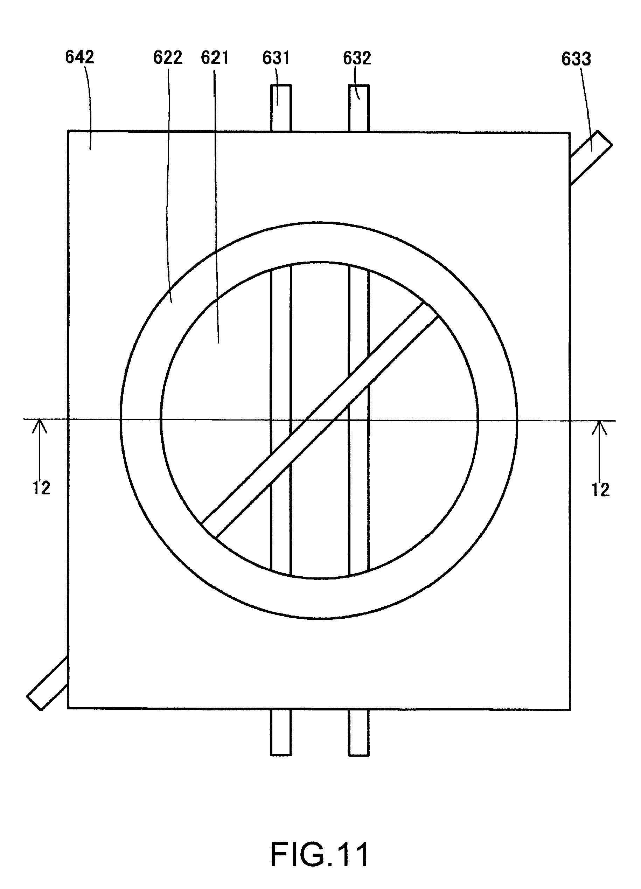

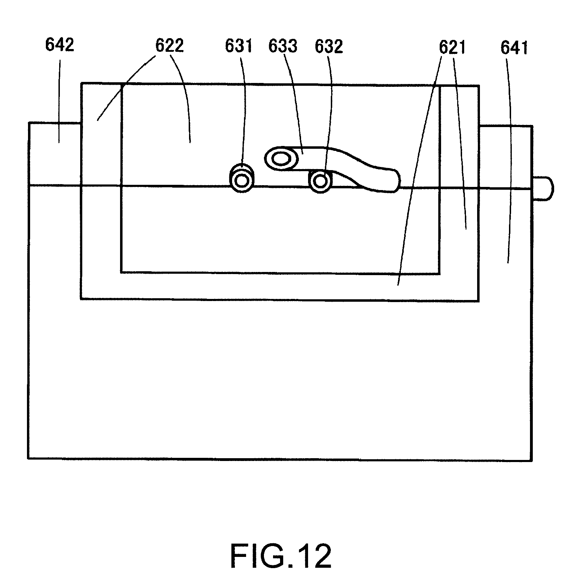

Next, the second flexible member 622 is inserted into a hole of the second member 642 (Step S770). Fig. 11 is a top view for describing a state where the second flexible member 622 has been inserted. Fig. 12 is a sectional view taken along line 12-12 in Fig. 11. Inserting the second flexible member in Step S770 causes the simulated blood vessel 630 to be pinched between the first flexible member 621 and the second flexible member 622 as illustrated in Figs. 11 and 12. As illustrated in Fig. 12, the second flexible member 622 further protrudes compared to the second member 642 in Step S770. That is, the second flexible member 622 is manufactured in a ring shape whose thickness is greater than the height of the second member 642 in Step S760.

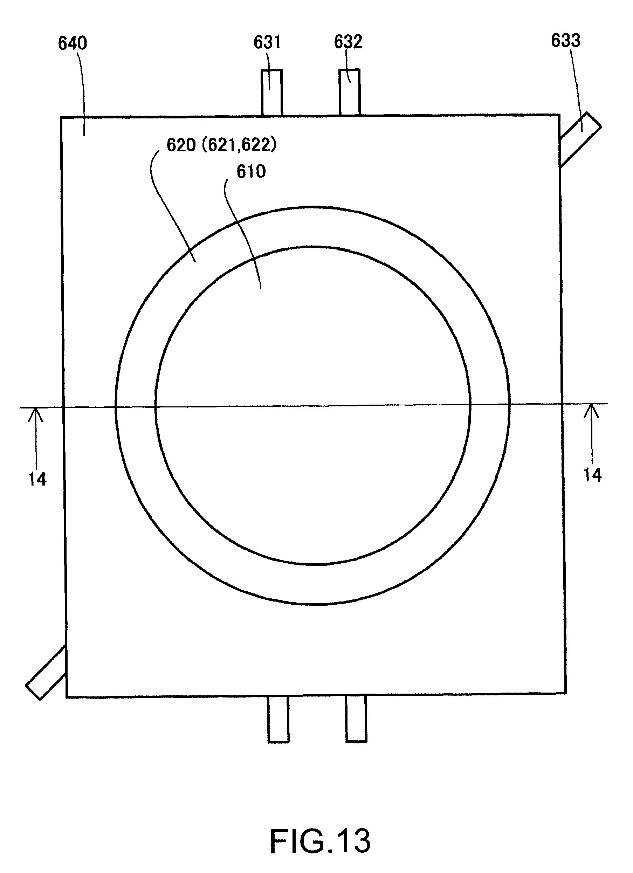

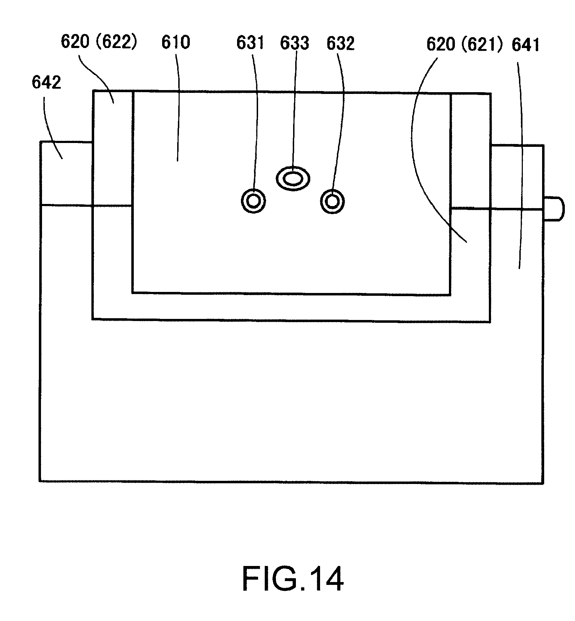

Next, the simulated parenchyma 610 is manufactured and arranged (Step S780). Fig. 13 is a top view for describing a state where the simulated parenchyma 610 has been arranged. Fig. 14 is a sectional view taken along line 14-14 in Fig. 13. When the simulated parenchyma 610 is manufactured in Step S780, the PVA is used. PVA materials are mixed and cured by freezing. When the simulated parenchyma 610 is arranged, the PVA materials are poured into a recess surrounded with the second flexible member 622. Then, in manufacturing the simulated parenchyma 610, the strength is adjusted by adjusting a mixing ratio of the PVA materials or by changing the manufacturing conditions, so that the pressing pin breaking strength becomes 0.01 MPa to 0.07 MPa. As described previously, in manufacturing the simulated parenchyma 610, various adjustments are performed so that the breaking strength and the elastic modulus are one fifth of those of the flexible member 620.

Immediately before the simulated organ 600 is used after Step S780 is completed, the simulated parenchyma 610 and an upper portion of the flexible member 620 are excised (Step S790). In this manner, the simulated organ 600 illustrated in Figs. 2 and 3 is completely obtained. In the simulated organ 600, the simulated blood vessel 630 whose pressing pin breaking strength is 0.2 $MPa/mm^2$ is embedded and included in the simulated parenchyma 610 whose pressing pin breaking strength is 0.01 MPa to 0.07 MPa. The simulated parenchyma 610 and the upper portion of the flexible member 620 correspond to a portion protruding from the upper surface of the case 640.

An excision test of the simulated parenchyma 610 is performed on the obtained simulated organ 600. This excision test is performed in order to evaluate performance of the liquid ejecting apparatus 20 illustrated in Fig. 1.

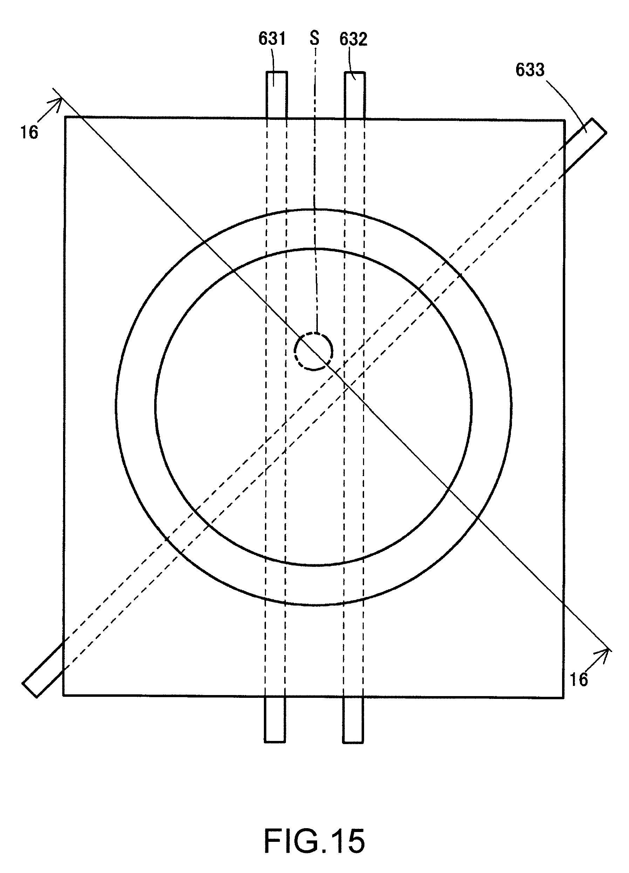

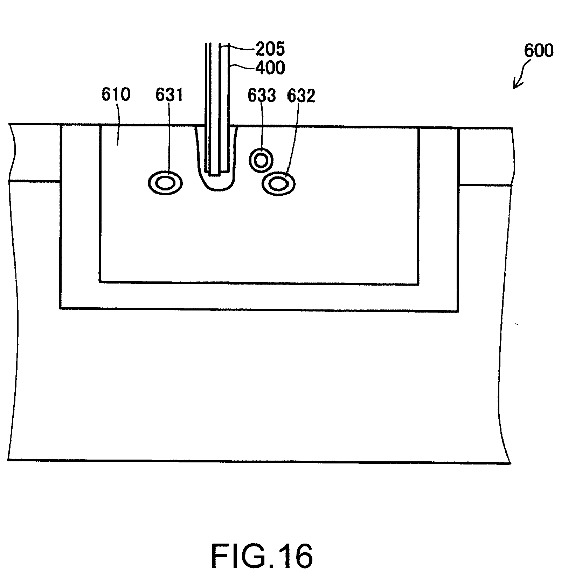

Fig. 15 is a top view for describing an excision portion Sp. Fig. 16 is a sectional view taken along line 16-16 in Fig. 15. The excision portion Sp is selected as a portion located in the vicinity of the intersection point between the first simulated blood vessel 631 and the third simulated blood vessel 633, and in the vicinity of the intersection point between the second simulated blood vessel 632 and the third simulated blood vessel 633. According to the liquid ejecting apparatus 20, a pulse jet of the liquid ejected from the ejecting tube 205 is adjusted so as to be suitable for incision and excision of the simulated parenchyma 610. It is confirmed that the pulse jet of the liquid intermittently ejected from the ejecting tube 205 after the pulse jet is adjusted enables an operator to perform incision and excision on the simulated parenchyma 610 in the illustrated excision portion Sp without any particular trouble.

The simulated organ 600 according to the above-described embodiment is configured so that the pressing pin breaking strength of the simulated blood vessel 630 is equal to or greater than three times that of the simulated parenchyma 610. Accordingly, in practicing incision and excision skills for the simulated parenchyma 610 illustrated in Fig. 17, even if a pulse jet is applied to the simulated blood vessel 630 since the pulse jet of the liquid intermittently ejected from the ejecting tube 205 reaches the simulated blood vessel 630, the simulated blood vessel 630 is not damaged. Therefore, according to the simulated organ 600 in the embodiment, an operation status can be provided on the assumption that incision or excision is performed on the simulated parenchyma 610 around the simulated blood vessel 630.

The simulated organ 600 according to the above-described embodiment is configured so that the pressing pin breaking strength of the simulated parenchyma 610 is 0.01 MPa to 0.07 MPa, and the pressing pin breaking strength of the simulated blood vessel 630 is 0.2 MPa which is equal to or greater than three times that of the simulated parenchyma 610. If the pressing pin breaking strength is set in this way, the simulated parenchyma 610 has a physical property of strength which is substantially the same as that of the cerebral parenchyma cell in the brain of the human body. The simulated blood vessel 630 also has the physical property of strength which is substantially the same as that of the cerebral parenchyma cell and the cerebral blood vessel embedded therein. Therefore, according to the simulated organ 600 in the embodiment, an operation status can be provided in which a relationship of the breaking strength with regard to the cerebral parenchyma cell in the brain of the human body and the cerebral blood vessel embedded therein is reflected.

Without being limited to the embodiment, the example, and the modification example which are described herein, the invention can be implemented according to various configurations within the scope not departing from the gist of the invention. For example, technical features in the embodiment, the example, and the modification example which correspond to technical features according to each aspect described in the summary of the invention can be appropriately replaced or combined with each other in order to partially or entirely solve the previously described problem or in order to partially or entirely achieve the previously described advantageous effects. If any one of the technical features is not described herein as essential, the technical feature can be appropriately omitted. For example, the following configurations can be adopted as an alternative.

According to the simulated organ 600, on the assumption of the cerebral parenchyma and the cerebral blood vessel, the simulated blood vessel 630 is embedded in the simulated parenchyma 610, and the pressing pin breaking strength of the simulated blood vessel 630 is 0.2 MPa which is equal to or greater than three times that of the simulated parenchyma 610. However, the pressing pin breaking strength may not be 0.2 MPa, and may be 0.1 MPa to 0.3 MPa.

According to the simulated organ 600, on the assumption of the cerebral parenchyma and the cerebral blood vessel, the simulated blood vessel 630 is embedded in the simulated parenchyma 610. However, organs other than the brain can be assumed. In this case, the pressing pin breaking strength of the simulated blood vessel 630 may be set to the pressing pin breaking strength needed until the blood vessel of the assumed organs starts to be damaged.

If the strength can be measured in a form of the simulated blood vessel 630 by using measurement specifications in the strength measuring machine, the pressing pin breaking strength of the simulated blood vessel 630 may be directly measured. In this case, the pressing pin breaking strength measured in both test samples described above may be supplemented by a ratio between the sheet thickness and the thickness of the simulated blood vessel 630.

The simulated organ 600 may be excised by using those which other than the intermittently ejected liquid. For example, the simulated organ 600 may be excised by using a continuously ejected liquid, or may be excised by using a liquid provided with excision capability using an ultrasound. Alternatively, the simulated organ 600 may be excised by using a metal scalpel.

The number of simulated blood vessels 630 may be one, two, four, or more. A configuration may be adopted in which at least one simulated blood vessel 630 is embedded in the simulated parenchyma 610.

In addition, the simulated blood vessel 630 is the hollow member, but may be a solid member.

The material of the simulated blood vessel 630 is not limited to that in the above-described example. For example, a synthetic resin other than the PVA (for example, urethane) may also be used, or a natural resin may also be used.

The material of the simulated parenchyma 610 is not limited to that in the above-described example. For example, a synthetic resin other than the PVA (for example, urethane or a rubber-based material) may also be used.

The simulated blood vessel 630 may be manufactured by using injection deposition (3D printing using an ink jet method).

The simulated parenchyma 610 may be manufactured by using 3D printing.

The simulated blood vessel 630 and the simulated parenchyma 610 may be collectively manufactured by using 3D printing. When 3D printing is performed in this way, an ink may be adjusted in advance so that the above-described strength relationship between the simulated parenchyma 610 and the simulated blood vessel 630 is expressed after the ink is dried.

The embodiment adopts a configuration in which the piezoelectric element is used as the actuator. However, the embodiment may adopt a configuration in which the liquid is ejected by using an optical maser, a configuration in which the liquid is ejected by a heater generating air bubbles in the liquid, or a configuration in which the liquid is ejected by a pump pressurizing the liquid. According to the configuration in which the liquid is ejected by using the optical maser, the optical maser emits radiation to the liquid so as to generate the air bubbles in the liquid, and increased pressure of the liquid which is caused by generating the air bubbles is utilized.

According to the embodiment, the second member 642 is fixed onto the first member 641, thereby configuring the case 640, but the configuration is not limited thereto. Any configuration may be adopted in which the first member 641 and the second member 642 are not erroneously moved relative to each other. Alternatively, a configuration may also be adopted in which two members are connected to each other using frictional force generated by two members coming into contact with each other, or a configuration may also be adopted in which the two members are attachable to and detachable from each other.

The embodiment adopts a configuration in which the simulated blood vessel 630 is embedded in the simulated parenchyma 610 by penetrating the simulated parenchyma 610, the flexible member 620, and the case 640, but the configuration is not limited thereto. A configuration may also be adopted in which the simulated blood vessel 630 penetrates at least one of the simulated parenchyma 610, the flexible member 620, and the case 640, or a configuration may also be adopted in which none of the members is penetrated. Any configuration may be adopted in which at least a portion of the simulated blood vessel 630 is embedded in the simulated parenchyma. In addition, the embodiment adopts a configuration in which the simulated blood vessel is fixed to the case 640, but the configuration is not limited thereto. A configuration may also be adopted in which the simulated blood vessel is less likely to move by coming into close contact with the simulated parenchyma without being fixed to the case 640.

## Claims

1.   A simulated organ comprising:

   a simulated blood vessel that simulates a blood vessel of a human body; and
   a simulated parenchyma that simulates a parenchyma cell of the human body,
   wherein the simulated blood vessel is embedded in the simulated parenchyma, and
   wherein the simulated blood vessel has pressing pin breaking strength which is equal to or greater than three times that of the simulated parenchyma.

2.   The simulated organ according to Claim 1, wherein the pressing pin breaking strength per unit area of the simulated parenchyma is 0.01 MPa to 0.07 MPa, and the pressing pin breaking strength per unit area of the simulated blood vessel is 0.1 MPa to 0.3 MPa.

3.   The simulated organ according to claim 1 or claim 2, wherein the simulated organ includes a flexible member and a case.

4.   The simulated organ according to any of claims 1 to 3, wherein the simulated blood vessel includes a first simulated blood vessel, a second simulated blood vessel and a third simulated blood vessel.

5.   The simulated organ according to claim 3 or 4, wherein the case includes a first member and a second member, wherein the second member is fixed onto the first member, thereby configuring the case.

6.   The simulated organ according to claim 3, wherein the first member and the second member are formed of a material having a sufficiently higher elastic modulus compared to the flexible member and having a sufficient rigidity for supporting the flexible member and the simulated blood vessel.

7. The simulated organ according to any of claims 3 to 6, wherein the case is transparent and the flexible member is visible from a side surface of the case.

8. The simulated organ according to any of claims 3 to 7, wherein the flexible member is arranged inside a cylindrical recess formed in a central portion of the case.

9. The simulated organ according to any of claims 3 to 8, wherein the flexible member comprises a first flexible member and a second flexible member, wherein the flexible member is formed in such a way that the first flexible member and the second flexible member are stacked on each other.

10. The simulated organ according to any of claims 3 to 9, wherein the flexible member is internally recessed so that the simulated parenchyma can be held therein, and has a circular cup shape.

11. The simulated organ according to any of claims 3 to 10, wherein the flexible member is formed of a material whose pressing pin breaking strength is five times and whose elastic modulus is five times compared to those of the simulated parenchyma.

12. The simulated organ according to any of claims 1 to 11, wherein the strength of the simulated parenchyma is changed by changing the manufacturing conditions of PVA, so that the pressing pin breaking strength per unit area of the simulated parenchyma is set to equal to or smaller than one third of the simulated blood vessel.

13. The simulated organ according to any of claims 1 to 11, wherein the pressing pin breaking strength per unit area of the simulated blood vessel is defined as 0.2 MPa.

14. The simulated organ according to any of claims 1 to 13, wherein the strength of the simulated parenchyma is adjusted by changing the manufacturing conditions of the PVA so as to obtain the pressing pin breaking strength per unit area in a range of 0.01 MPa to 0.07 MPa.

15. The simulated organ according to any of claims 1 to 14, wherein a material of the simulated blood vessel is PVA, wherein the manufacturing conditions of the PVA are adjusted so that the pressing pin breaking strength per unit area is 0.2 MPa.

FIG. 1

FIG. 2

FIG. 3

FIG. 4

# FIG. 5

```
          ┌─────────────────────────────┐
          │   MANUFACTURING METHOD OF   │
          │      SIMULATED ORGAN        │
          └─────────────────────────────┘
                        │
          ┌─────────────────────────────┐
          │ MANUFACTURE FIRST FLEXIBLE MEMBER │ ───── S710
          └─────────────────────────────┘
                        │
          ┌─────────────────────────────┐
          │  INSERT FIRST FLEXIBLE MEMBER   │ ───── S720
          │     INTO FIRST MEMBER           │
          └─────────────────────────────┘
                        │
          ┌─────────────────────────────┐
          │ MANUFACTURE SIMULATED BLOOD VESSEL │ ───── S730
          └─────────────────────────────┘
                        │
          ┌─────────────────────────────┐
          │  ARRANGE SIMULATED BLOOD VESSEL  │ ───── S740
          └─────────────────────────────┘
                        │
          ┌─────────────────────────────┐
          │    FIX SECOND FIXING MEMBER     │ ───── S750
          │   (FORM CASE COMPLETELY)        │
          └─────────────────────────────┘
                        │
          ┌─────────────────────────────┐
          │ MANUFACTURE SECOND FLEXIBLE MEMBER │ ───── S760
          └─────────────────────────────┘
                        │
          ┌─────────────────────────────┐
          │ INSERT SECOND FLEXIBLE MEMBER   │ ───── S770
          │    INTO SECOND MEMBER           │
          └─────────────────────────────┘
                        │
          ┌─────────────────────────────┐
          │    MANUFACTURE AND ARRANGE      │ ───── S780
          │    SIMULATED PARENCHYMA         │
          │ (MIX, POUR, AND CURE PVA MATERIALS) │
          └─────────────────────────────┘
                        │
          ┌─────────────────────────────┐
          │ EXCISE UPPER PORTION IMMEDIATELY │ ───── S790
          │       BEFORE USE                │
          └─────────────────────────────┘
                        │
                  ┌──────────┐
                  │   END    │
                  └──────────┘
```

# FIG. 6

FIG. 7

641    621

FIG. 8

FIG. 9

STEP S750

FIG.10

642    622  621    631    632    633

# FIG.11

FIG.12

FIG.13

620 (622)   610      631  633  632          620 (621) 641

642

FIG.14

FIG.15

FIG.16

Europäisches
Patentamt

European
Patent Office

Office européen
des brevets

# EUROPEAN SEARCH REPORT

**Application Number**

EP 16 18 1419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 677 273 A1 (INST NAGOYA IND SCIENCE RES [JP]) 5 July 2006 (2006-07-05) | 1-4,7-15 | INV. G09B23/28 |
| Y | * paragraphs [0029], [0030], [0033], [0034], [0041], [0072]; figures 2A,4,7 * | 5,6 | G09B23/30 |
| | ----- | | |
| A | EP 2 410 502 A1 (UNIV WASEDA [JP]) 25 January 2012 (2012-01-25) * paragraphs [0022], [0023], [0025]; figure 1 * | 1 | |
| | ----- | | |
| Y | GB 2 328 775 A (MOUSSA SAMI AHMED [GB]) 3 March 1999 (1999-03-03) * claim 1; figures 1,4 * | 5,6 | |
| | ----- | | |
| A | EP 2 287 823 A1 (ONO & CO LTD [JP]) 23 February 2011 (2011-02-23) * claim 1; figure 1 * | 1 | |
| | ----- | | |

**TECHNICAL FIELDS SEARCHED (IPC)**

G09B

The present search report has been drawn up for all claims

| Place of search | Date of completion of the search | Examiner |
|---|---|---|
| Munich | 31 August 2016 | Beauce, Gaetan |

EPO FORM 1503 03.82 (P04C01)

## ANNEX TO THE EUROPEAN SEARCH REPORT
## ON EUROPEAN PATENT APPLICATION NO.

EP 16 18 1419

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2016

| Patent document cited in search report | | Publication date | Patent family member(s) | | Publication date |
|---|---|---|---|---|---|
| EP 1677273 | A1 | 05-07-2006 | EP | 1677273 A1 | 05-07-2006 |
| | | | KR | 20060085692 A | 27-07-2006 |
| | | | US | 2007148626 A1 | 28-06-2007 |
| | | | WO | 2005038751 A1 | 28-04-2005 |
| EP 2410502 | A1 | 25-01-2012 | EP | 2410502 A1 | 25-01-2012 |
| | | | JP | 4404963 B1 | 27-01-2010 |
| | | | US | 2012040323 A1 | 16-02-2012 |
| | | | WO | 2010106691 A1 | 23-09-2010 |
| GB 2328775 | A | 03-03-1999 | NONE | | |
| EP 2287823 | A1 | 23-02-2011 | CN | 102027525 A | 20-04-2011 |
| | | | EP | 2287823 A1 | 23-02-2011 |
| | | | JP | 5140857 B2 | 13-02-2013 |
| | | | JP | 2009273508 A | 26-11-2009 |
| | | | KR | 20110008254 A | 26-01-2011 |
| | | | US | 2011060446 A1 | 10-03-2011 |
| | | | WO | 2009139431 A1 | 19-11-2009 |

EPO FORM P0459

For more details about this annex : see Official Journal of the European Patent Office, No. 12/82

**REFERENCES CITED IN THE DESCRIPTION**

**Patent documents cited in the description**

- JP 2012203153 A